# EUROPEAN PATENT APPLICATION

(11) **EP 4 821 968 A1**
(43) Date of publication of application: **14.10.2026**
(21) Application number: 24900826.9
(22) Date of filing: 15.10.2024
(51) Int. Cl.: C08G 65/26, C08G 64/34, B01J 27/26, B01J 31/22, B01J 35/40, B01J 37/03

(54) **DOUBLE METAL CYANIDE CATALYST, METHOD OF PRODUCING SAME, AND POLYOL PRODUCTION METHOD USING SAME**

(30) Priority: 04.12.2023 KR 20230172949
(71) Applicant: Research Institute of Industrial Science & Technology, Pohang-si, Gyeongsangbuk-do 37673 (KR)
(72) Inventor: SHIN, Hyesun, Gwangyang-si, Jeollanam-do 57795 (KR); KIM, Ji Hyeon, Gwangyang-si, Jeollanam-do 57727 (KR); HA, Chang Ho, Pohang-si, Gyeongsangbuk-do 37662 (KR); KIM, Joonwoo, Suncheon-si, Jeollanam-do 58006 (KR)
(74) Representative: Ricker, Mathias
(86) International application number: PCT/KR2024/015614
(87) International publication number: WO 2025/121638

(57) **Abstract**

The double metal cyanide catalyst according to an embodiment of the present invention includes a metal salt; a metal cyanide salt, a complexing agent, and a co-complexing agent, wherein the complexing agent includes one or more selected from acrylic or methacrylic compounds, and the co-complexing agent may be a homo-polymer having a weight average molecular weight of 5500 g/mol or less.

## Description

### [TECHNICAL FIELD]

The present invention relates to a double metal cyanide catalyst for preparing a polyol, a method for preparing the same, and a method for preparing a polyol using the same, and more specifically, to a double metal cyanide catalyst for preparing a polyol having high selectivity for a polyol, a method for preparing the same, and a method for preparing a polyol using the same.

### [BACKGROUND ART]

Polyols are raw materials industrially manufactured in large quantities, and are generally used in the form of polyether polyols as starting materials for preparing polyurethane together with polyisocyanates. As a catalyst used for preparing a polyol, soluble basic metal hydroxides and the like are generally used, and potassium hydroxide (KOH) is widely used. However, when an alkali metal hydroxide is used, the content of monofunctional polyether having a terminal double bond, so-called monol, increases, which is very disadvantageous in the preparation of polyurethane. In contrast, when a double metal cyanide (DMC) catalyst is used, the content of monol can be relatively reduced, and the addition reaction rate of cyclohexene oxide (CHO) or propylene oxide (PO) can be increased, and the thus-obtained polyether polyol can be processed into high-grade polyurethane, for example, coatings, elastomers, sealants, foams, and adhesives.

Meanwhile, recently, as a high value-added compound through direct utilization of carbon dioxide (CO₂), a polyether carbonate polyol or polyol, which is a copolymer polyol to which CO₂ has been added, may also be used as a raw material for polyurethane. In the preparation of the polyether polyol, copolymerization using a DMC catalyst under a CO₂ pressurized atmosphere is possible together with propylene oxide (PO) and glycol, or a polymerized form of polyethylene glycol or polypropylene glycol, which are reactants used in the preparation of the polyether polyol (see the following chemical formula).

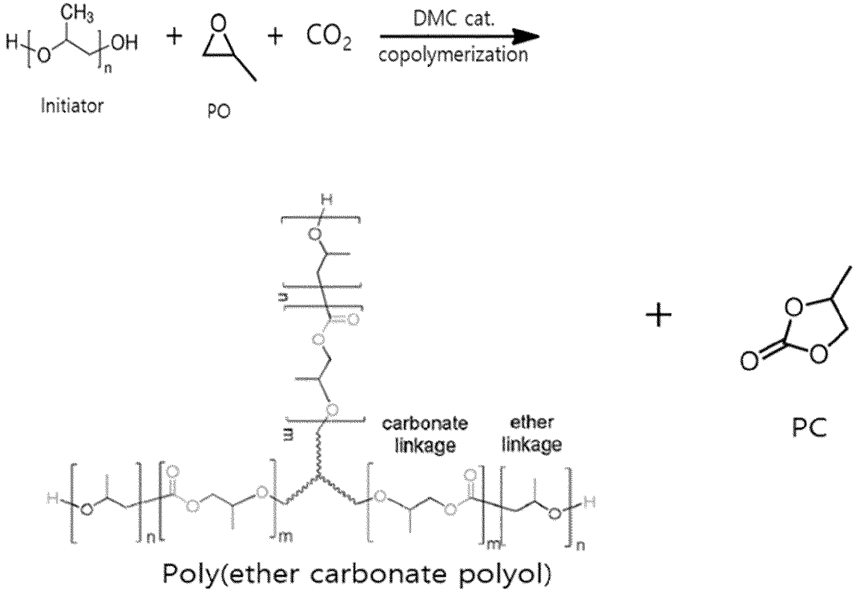

Although many conventional technologies have been reported for DMC catalysts and preparation methods used in the preparation of polyether carbonate polyols as described above, a high-activity catalyst is still required. This is because polymerization can be performed with only a trace amount of catalyst during ring-opening polymerization, thereby making it possible to omit a catalyst removal process after preparing a polyol. That is, there is a demand for increasing molecular weight even with only a trace amount of input, and for improving reactivity in which CO₂, which is a thermodynamically stable material, is incorporated into a main chain in the form of carbonate. In addition, compared with the form of a polyether polyol, a phenomenon in which a polydispersity index (PDI), which indicates dispersity, increases due to random copolymerization of monomer PO and CO₂ during copolymerization of CO₂ is unavoidable, and thus it is necessary to control the PDI to a level of conventional polypropylene glycol or polyether polyol (PDI: <1.2). Control of terminal functionality of a final polyol product is also a necessary factor for use as a high-grade polyurethane material.

Major factors controlling the activity of the DMC catalyst are the types and combinations of a double metal, a complexing agent (CA), and a co-complexing agent (co-CA), and appropriate ratios and synthesis conditions thereof, such as synthesis temperature, time, mixing order, and drying method, have been proposed in conventional prior arts.

When synthesis is performed using complexing agents such as alcohols including conventional tert-butyl alcohol, aldehydes, ketones, ethers, esters, amides, ureas, and nitriles, the degree of polymerization and physical properties of the polymer are known to be excellent. However, demands for a high CO₂ content ratio, dispersibility, and polyol selectivity have still continued, and studies have been conducted until recently to develop high-efficiency catalysts.

Accordingly, there is a need to develop a method for preparing a polyether carbonate polyol having excellent polyol selectivity, a high CO₂ content ratio, and a low PDI.

### [SUMMARY OF THE INVENTION]

### [Technical Problem]

An object of the present invention is to provide a double metal cyanide catalyst having high selectivity for a polyether carbonate polyol, and a method for preparing the same.

Another object of the present invention is to provide a method for preparing a polyether carbonate polyol having a high CO₂ content ratio and a low PDI using the catalyst.

### [Technical Solution]

A double metal cyanide catalyst according to an embodiment of the present invention includes a metal salt; a metal cyanide salt, a complexing agent, and a co-complexing agent, and the co-complexing agent may be a homo-polymer having a weight average molecular weight of 5500 g/mol or less.

The co-complexing agent may include one or more selected from a polyacrylic acid polymer, polyethylene glycol, polypropylene glycol, a copolymer thereof, and a mixture thereof, and the complexing agent may include one or more selected from acrylic or methacrylic compounds.

The acrylic or methacrylic compound may include one or more selected from the following Chemical Formulas 1-1 to 1-2.

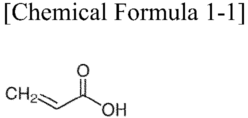

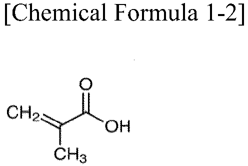

The double metal cyanide catalyst may be a compound represented by the following Chemical Formula 1.

[Chemical Formula 1] Mₐ[M' (CN)₆)]_{b}·L_{c}·L'_{d}

In Chemical Formula 1, M is one selected from zinc(II), iron(II), iron(III), nickel(II), manganese(II), cobalt(II), tin(II), lead(II), molybdenum(IV), molybdenum(VI), aluminum(III), vanadium(V), vanadium(IV), strontium(II), tungsten(IV), tungsten(VI), copper(II), and chromium(III), M' is one selected from iron(II), iron(III), cobalt(II), cobalt(III), chromium(II), chromium(III), manganese(II), manganese(III), iridium(III), nickel(II), rhodium(III), ruthenium(II), vanadium(V), and vanadium(IV), L includes an acrylic or methacrylic compound as a complexing agent, L' includes a hydrophilic homo-polymer as a co-complexing agent, and a, b, c, and d are positive numbers.

An apparent density of the double metal cyanide catalyst may be 0.30 g/cm³ to 0.60 g/cm³.

The double metal cyanide catalyst may be a secondary particle in which layered nanosheets are stacked, and an average major-axis length of a broad surface of the layered nanosheet may be 1.0 µm to 15.0 µm.

An average minor-axis length of the broad surface of the layered nanosheet may be in a range of 1/7 to 6/7 of the average major-axis length, and an average thickness of the nanosheet may be 25 nm to 85 nm.

A method for preparing a double metal cyanide catalyst according to another embodiment of the present invention may include: preparing a first solution including a metal salt, a complexing agent, and water; preparing a second solution including a metal cyanide salt and water; preparing a third solution including a complexing agent and a co-complexing agent; preparing a fourth solution by mixing the first solution and the second solution; a first reaction step of adding the third solution to the fourth solution and reacting the same; a second reaction step of separating a precipitate formed in the first reaction step, and then mixing the separated precipitate with a solution including water and a complexing agent and reacting the same; a third reaction step of adding a fifth solution including a complexing agent and a co-complexing agent after completion of the second reaction step and reacting the same; and separating a precipitate formed in the third reaction step.

The co-complexing agent may be a homo-polymer having a weight average molecular weight of 5500 g/mol or less.

In the step of preparing the first solution including the metal salt, the complexing agent, and water, the metal salt, the complexing agent, and water may be mixed and heated to a temperature of 50°C to 90°C.

In the step of preparing the second solution including the metal cyanide salt and water, the metal cyanide salt and water may be mixed and heated to a temperature of 50°C to 70°C.

In the step of preparing the first solution including the metal salt, the complexing agent, and water, the complexing agent may be mixed in an amount of 0.04 mol to 1.0 mol per 1.0 mol of the water.

In the step of preparing the third solution including the complexing agent and the co-complexing agent, a molar ratio of the complexing agent to the co-complexing agent (complexing agent:co-complexing agent) may be 600:1 to 1200:1.

In the third reaction step of adding the fifth solution including the complexing agent and the co-complexing agent after completion of the second reaction step and reacting the same, a molar ratio of the complexing agent to the co-complexing agent in the fifth solution (complexing agent:co-complexing agent) may be 150:1 to 1250:1.

In the step of preparing the fourth solution by mixing the first solution and the second solution, a molar ratio of the metal cyanide salt to the metal salt in the prepared fourth solution (metal cyanide salt:metal salt) may be 2:1 to 30:1.

The second reaction step and the third reaction step may be performed two or more times.

The method may further include washing and drying the precipitate separated in the step of separating the precipitate formed in the third reaction step, and in the step of washing and drying the separated precipitate, the precipitate may be washed using water.

A method for preparing a polyol according to another embodiment of the present invention may include: introducing the double metal cyanide catalyst and a solvent into a reactor; purging the inside of the reactor using CO₂ gas, and then adjusting pressure with CO₂ gas while heating the reactor; introducing an initiator and an epoxy compound into the reactor to form a product; and separating a polyol in the product.

The initiator may be a compound represented by the following Chemical Formula 2.

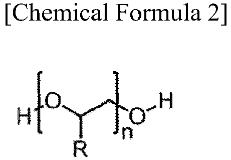

In Chemical Formula 2, R is H or an alkyl group having 1 carbon atom, and n is an integer in a range of 1 to 227.

The epoxy compound may be a compound represented by the following Chemical Formula 3.

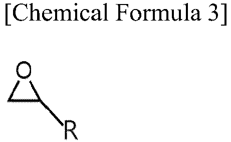

In Chemical Formula 3, R may be selected from H, -CH₃, -CH₃OH, methyl halides (-CH₃F, -CH₃Cl, and -CH₃Br), and alkyl groups having 1 to 8 carbon atoms.

A weight average molecular weight of the polyol may be 3000 g/mol to 5000 g/mol, a polydispersity index (PDI) of the polyol may be 1.65 or less, and the number of functional groups of the polyol may be 2.5 or more.

Selectivity of the polyol may be 65% or more.

### [Advantageous Effects]

The catalyst according to an embodiment of the present invention has high selectivity for a polyether carbonate polyol, and a polyether carbonate polyol having a high CO₂ content ratio and a low PDI can be prepared using the catalyst.

### [BRIEF DESCRIPTION OF THE DRAWINGS]

FIG. 1 shows a major axis and a minor axis in an FE-SEM analysis image of a double metal cyanide catalyst according to an embodiment of the present invention.
FIG. 2 shows scanning electron microscope (FE-SEM) analysis images of catalysts prepared according to Preparation Examples 1, 3, and 4.

### [BEST MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the context clearly indicates otherwise. As used in the specification, the term "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless otherwise specifically stated, % means wt%, and 1 ppm means 0.0001 wt%.

In the present specification, the term "combination(s) thereof" described in a Markush-type expression means one or more mixtures or combinations selected from the group consisting of the elements described in the Markush-type expression, and means including one or more selected from the group consisting of the elements.

Hereinafter, embodiments of the present invention will be described in detail so that a person having ordinary skill in the art to which the present invention pertains can easily practice the present invention. However, the present invention may be embodied in various different forms and is not limited to the embodiments described herein.

### (Double Metal Cyanide Catalyst)

In an embodiment of the present invention, the double metal cyanide catalyst may include a metal salt; a metal cyanide salt, a complexing agent, and a co-complexing agent.

The complexing agent and the co-complexing agent included in the catalyst of the present invention may be used to change the crystal size and crystallinity of the catalyst, thereby increasing the surface area and activity of the catalyst.

The complexing agent may include one or more selected from acrylic or methacrylic compounds, and the co-complexing agent may be a homo-polymer.

The acrylic or methacrylic compound may be selected from the following chemical formulas.

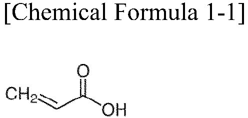

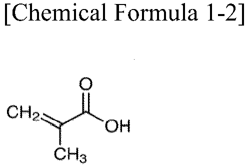

In an embodiment of the present invention, by using the acrylic or methacrylic compound as the complexing agent, the attractive force between the complexing agent and a metal is appropriately controlled, and the complexing agent is appropriately coordinated in the catalyst matrix structure, thereby exhibiting high catalytic activity during preparation of a polyol.

In an embodiment of the present invention, the co-complexing agent may include one or more selected from polyethylene glycol, polypropylene glycol, a poly(oxyethylene-block-propylene) copolymer, poly(oxyethylene-block-oxypropylene-block-oxyethylene), a polyacrylic acid polymer, and a poly(ethylene-block-acrylic acid) copolymer, and specifically may include one or more selected from a polyacrylic acid polymer, polyethylene glycol, polypropylene glycol, a copolymer thereof, and a mixture thereof.

The co-complexing agent may include one or more selected from the following Chemical Formula 1-3 or 1-4.

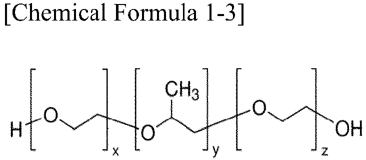

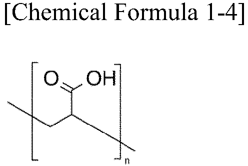

More specifically, the co-complexing agent may be a homo-polymer. The homo-polymer may have a weight average molecular weight of 6000 g/mol or less, specifically 5500 g/mol or less, and more specifically 5100 g/mol or less. The lower limit of the weight average molecular weight of the co-complexing agent is not particularly limited, but may be 500 g/mol or more, and specifically 1000 g/mol or more.

When the weight average molecular weight of the co-complexing agent exceeds the above range, polymerization performance may be deteriorated because exposure of catalytic active sites becomes difficult during the polyol preparation reaction. When the weight average molecular weight is less than the above range, if structural formation by interaction with metal active sites of the catalyst is not properly performed, structural stability of the metal catalyst may be lowered due to exposure to external air and moisture, which is not preferable.

Meanwhile, in an embodiment of the present invention, the metal ions of the metal salt and the metal cyanide salt constituting the double metal cyanide catalyst may be any one selected from zinc(II), iron(II), iron(III), nickel(II), manganese(II), cobalt(II), tin(II), lead(II), molybdenum(IV), molybdenum(VI), aluminum(III), vanadium(V), vanadium(IV), strontium(II), tungsten(IV), tungsten(VI), copper(II), and chromium(III), and the metal ion of the metal cyanide salt may include one or more selected from iron(II), iron(III), cobalt(II), cobalt(III), chromium(II), chromium(III), manganese(II), manganese(III), iridium(III), nickel(II), rhodium(III), ruthenium(II), vanadium(V), and vanadium(IV), but is not limited thereto.

In an embodiment of the present invention, the double metal cyanide catalyst may be a compound represented by the following Chemical Formula 1.

[Chemical Formula 1] Mₐ[M' (CN)₆)]_{b}·L_{c}·L'_{d}

In Chemical Formula 1, M is one selected from zinc(II), iron(II), iron(III), nickel(II), manganese(II), cobalt(II), tin(II), lead(II), molybdenum(IV), molybdenum(VI), aluminum(III), vanadium(V), vanadium(IV), strontium(II), tungsten(IV), tungsten(VI), copper(II), and chromium(III), M' is one selected from iron(II), iron(III), cobalt(II), cobalt(III), chromium(II), chromium(III), manganese(II), manganese(III), iridium(III), nickel(II), rhodium(III), ruthenium(II), vanadium(V), and vanadium(IV), L includes an acrylic or methacrylic compound as a complexing agent, L' includes a hydrophilic homo-polymer as a co-complexing agent, and a, b, c, and d are positive numbers.

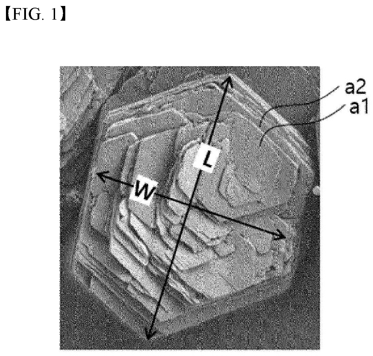

FIG. 1 shows a major axis and a minor axis in an FE-SEM analysis image of a double metal cyanide catalyst according to an embodiment of the present invention.

Referring to FIG. 1, the double metal cyanide catalyst according to an embodiment of the present invention may have a secondary particle shape formed by stacking nanosheets.

A broad surface of each of the nanosheets (a1, a2) may have a polygonal shape, and specifically a hexagonal shape.

The nanosheets (a1, a2) are 2D layered, and the average major-axis length (L) of the broad surface may be 0.1 µm to 15.0 µm, specifically 0.5 µm to 15.0 µm, and more specifically 1.0 µm to 15.0 µm.

In the present invention, the major-axis length (L) means the longest length in the broad surface of the nanosheet, and the minor-axis length (W) may be in a range of 1/7 to 6/7 of the major-axis length (L), specifically 1/6 to 5/6, and more specifically 1/5 to 4/5. The minor axis means the longest length among lengths perpendicular to the major axis in the broad surface of the nanosheet.

In addition, the nanosheets (a1, a2) may have an average thickness of 10 nm to 100 nm, specifically 25 nm to 85 nm, more specifically 30 nm to 70 nm, and still more specifically 30 nm to 50 nm.

When the average major-axis length (L), average minor-axis length (W), and average thickness of the nanosheet satisfy the above ranges, the crystal thickness of the catalyst is reduced, spaces between crystals are formed, and thus more catalytic active sites are exposed. Accordingly, the rate (ratio) at which reactants are initiated at active sites increases, so that molecular weight increases during polyol synthesis. In addition, since immediate polymerization occurs after the reactants are initiated, the probability that intermediates are formed as by-products decreases, thereby improving polymer selectivity, which is preferable.

In the present invention, the average major-axis length (L), average minor-axis length (W), and average thickness of the nanosheet are calculated by measuring the major-axis length, minor-axis length, and thickness of 10 to 30 secondary particles observed in scanning electron microscope (FE-SEM) analysis, and 2 to 5 nanosheets per particle, and calculating an average value.

Specifically, in the secondary particle, adjacent nanosheets (a1, a2) may be stacked such that broad surfaces thereof face each other. The secondary particle may have an average major-axis length (L) of 0.5 µm to 10.0 µm, and more specifically 1.0 µm to 10.0 µm, based on the broad surface of the nanosheet.

The secondary particle may have an average minor-axis length (W) in a range of 1/7 to 6/7 of the average major-axis length (L), specifically 1/6 to 5/6, and more specifically 1/5 to 4/5, based on the broad surface of the nanosheet.

Meanwhile, the apparent density of the double metal cyanide catalyst composed of the secondary particles may be 0.30 g/cm³ to 0.60 g/cm³, and specifically 0.35 g/cm³ to 0.45 g/cm³.

When the double metal cyanide catalyst satisfies the above range, if particles are formed with a small crystal size or a small thickness, clusters of small crystals are formed, and contact efficiency between major reactants (PO, CO₂, initiator) and catalytic active sites is improved, thereby improving polymer molecular weight, selectivity, and uniformity, which is preferable.

### (Method for Preparing Double Metal Cyanide Catalyst)

Hereinafter, a method for preparing a double metal cyanide catalyst according to another embodiment of the present invention will be described.

First, a first solution including a metal salt, a complexing agent, and water; a second solution including a metal cyanide salt and water; and a third solution including a complexing agent and a co-complexing agent may be prepared.

The first solution including the metal salt, the complexing agent, and water may be prepared by introducing the metal salt, the complexing agent, and water into a mixing container and then heating the same to a temperature of 50°C to 90°C, specifically 50°C to 70°C, under stirring conditions. In this case, the stirring time may be 10 minutes or more, specifically 10 minutes to 60 minutes, and more specifically 15 minutes to 30 minutes. In this case, the complexing agent may be mixed in an amount of 0.04 mol to 1.0 mol, and specifically 0.04 mol to 0.1 mol, per 1.0 mol of water.

The second solution including the metal cyanide salt and water may be prepared by introducing the metal cyanide salt and water into a mixing container and then heating the same to a temperature of 50°C to 90°C, and specifically 50°C to 70°C, under stirring conditions. In this case, the stirring time may be 30 minutes or more, and specifically 30 minutes to 90 minutes.

The third solution including the complexing agent and the co-complexing agent may be prepared by introducing the complexing agent and the co-complexing agent into a mixing container and then stirring the same under room temperature conditions. In this case, the molar ratio of the complexing agent to the co-complexing agent (complexing agent:co-complexing agent) may be 200:1 to 1200:1, and specifically 600:1 to 1200:1.

When the first solution, the second solution, and the third solution are prepared under the above conditions, the metal salt and the complexing agent are uniformly dispersed in water, and a precipitate can be formed, which is preferable.

In addition, the prepared first solution and second solution are mixed to prepare a fourth solution. Specifically, the first solution and the second solution are mixed under room temperature conditions and uniformly stirred to prepare the fourth solution. In this case, the molar ratio of the metal cyanide salt to the metal salt in the prepared fourth solution (metal cyanide salt:metal salt) may be 2:1 to 30:1, specifically 2:1 to 25:1, and more specifically 2:1 to 10:1. When the molar ratio of the metal cyanide salt to the metal salt exceeds the above range, unreacted metal is included in the prepared catalyst, and thus catalytic activity is lowered. When the molar ratio is less than the above range, the amount of metal having active sites is insignificant, and thus catalytic activity is deteriorated.

Subsequently, a first reaction step may be performed by adding the third solution to the prepared fourth solution and reacting the same. Specifically, the reaction may be performed for 1 minute to 20 minutes under stirring conditions, and more specifically for 1 minute to 10 minutes. When the reaction is performed under the above conditions, a desired catalyst can be economically prepared.

After completion of the first reaction step, a precipitate formed in the first reaction step may be separated, and then a second reaction step may be performed in which the separated precipitate is mixed with a solution including water and a complexing agent and reacted. In an embodiment of the present invention, the second reaction step may be performed under conditions of heating to a temperature of 50°C to 90°C while mixing using a stirrer, and specifically may be performed for about 60 minutes under conditions of heating to a temperature of 50°C to 70°C.

After completion of the second reaction step, a third reaction step of adding a fifth solution including a complexing agent and a co-complexing agent and reacting the same may be performed, and a precipitate formed in the third reaction step may be separated using a centrifuge. The molar ratio of the complexing agent to the co-complexing agent in the fifth solution (complexing agent:co-complexing agent) may be 150:1 to 1250:1.

The precipitate separated in the third reaction step may be washed with distilled water and dried to obtain a double metal cyanide catalyst, which is a final product.

Meanwhile, in an embodiment of the present invention, the second reaction step and the third reaction step may be repeatedly performed two or more times.

The separated precipitate may be subjected to a fourth reaction step in which the precipitate is mixed with a solution including water and a complexing agent and reacted. In this case, the concentration of the complexing agent in the solution including water and the complexing agent in the fourth reaction step may be equal to or less than the concentration of the complexing agent in the solution including water and the complexing agent in the second reaction step. Meanwhile, the reaction temperature and reaction time of the fourth reaction step may be the same as those of the second reaction step.

Meanwhile, after completion of the fourth reaction step, a fifth reaction step may be performed by adding a mixed solution including a complexing agent and a co-complexing agent and reacting the same. In this case, the molar ratio of the complexing agent and the co-complexing agent in the mixed solution including the complexing agent and the co-complexing agent added in the fourth reaction step may be equal to or less than the molar ratio of the complexing agent to the co-complexing agent in the fifth solution (complexing agent:co-complexing agent).

The precipitate separated in the fifth reaction step may be separated as a solid precipitate obtained using centrifugation, and a final solid precipitate obtained by repeating washing and centrifugation with 100 mL of distilled water three times was obtained. The final catalyst precipitate may be dried under a vacuum of 30 in.Hg at 80°C until a constant weight is reached, thereby obtaining a double metal cyanide catalyst, which is a final product.

The metal salt, the metal cyanide salt, the complexing agent, and the co-complexing agent have been described above, and thus descriptions thereof will be omitted herein.

### (Method for Preparing Polyol)

Another embodiment of the present invention provides a method for preparing a polyol.

Specifically, a method for preparing a polyol by polymerizing an epoxy compound in the presence of the double metal cyanide catalyst and an initiator is provided.

First, the double metal cyanide catalyst and a solvent are introduced into a reactor. Here, the solvent may be an organic solvent, and specifically may be one or more selected from toluene, hexane, and chloroform.

Next, the inside of the reactor is purged with CO₂ gas to form a CO₂ atmosphere, the reactor is sealed, and then the reactor is heated. Meanwhile, the internal pressure of the reactor may be adjusted by controlling the supply amount of CO₂.

Subsequently, a step of introducing an initiator and an epoxy compound into the reactor to form a product may be performed.

While stirring the double metal cyanide catalyst and solvent charged into the reactor, the initiator and epoxy compound may be introduced and reacted for 2 hours. In this case, the reactor temperature may be 100°C or higher, the reaction pressure may be 15 barg or higher, and the reaction time may be about 2 hours.

Meanwhile, the initiator may be a compound represented by the following Chemical Formula 2.

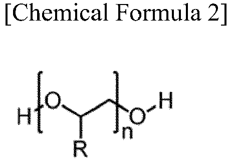

In Chemical Formula 2, R is H or an alkyl group having 1 carbon atom, and n is an integer in a range of 1 to 227.

The epoxy compound may be a compound represented by the following Chemical Formula 3.

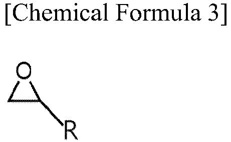

In Chemical Formula 3, R may be selected from H, -CH₃, -CH₃OH, methyl halides (-CH₃F, -CH₃Cl, and -CH₃Br), and alkyl groups having 1 to 8 carbon atoms.

After completion of the step of introducing the initiator and the epoxy compound into the reactor to form the product, the catalyst is separated through filtration. From the solvent from which the catalyst has been separated, unreacted epoxy compound may be removed through vacuum evaporation, thereby preparing a polyether carbonate polyol. In this case, propylene carbonate (PC), which is a by-product, may be included.

Liquid-liquid separation purification may be performed to obtain a final polyol.

The polyol prepared according to the method for preparing a polyol of the present invention may have a weight average molecular weight of 3000 g/mol or more, specifically 3150 g/mol to 5000 g/mol, and more specifically 3200 g/mol to 4000 g/mol.

The polyol prepared according to the method for preparing a polyol of the present invention may have a polydispersity index (PDI) of 1.65 or less, specifically 1.60 or less, and more specifically 1.45 or less.

The polyol prepared according to the method for preparing a polyol of the present invention may have the number of functional groups of 2.5 or more, and specifically 2.7 or more.

The polyol prepared according to the method for preparing a polyol of the present invention may have selectivity of 65% or more.

The polyol having the above characteristics is preferable because it can form an appropriate molecular weight, polydispersity index, and number of functional groups as a polyol product used for preparing polyurethane foams, films, and coatings.

### [MODE FOR CARRYING OUT THE INVENTION]

Hereinafter, Examples of the present invention will be described in detail. However, these are provided as examples, and the present invention is not limited thereby, and the present invention is defined only by the scope of the claims to be described below.

### Preparation Example 1: Preparation of Double Metal Cyanide Catalyst DMC-AA-P123

In a first beaker, 36 g of zinc chloride, 138 g of distilled water, and 24.5 g of acrylic acid (AA) as a complexing agent were mixed to prepare Solution 1. In a second beaker, 3.9 g of potassium hexacyanocobaltate was dissolved in 16 mL of distilled water to prepare Solution 2. In a third beaker, 2.9 g of poly(ethylene glycol)-block-poly(propylene glycol)-block-poly(ethylene glycol) (Pluronic 123; P-123, Mn=5,800 g/mol), as a co-complexing agent, was dissolved in 22.1 g of AA to prepare Solution 3. Solution 1 was introduced into a spherical flask, stirred at 50°C using a mechanical stirrer, and Solution 2 was introduced and reacted for 1 hour. Thereafter, Solution 3 was added and reacted for 5 minutes. The solution after reaction was separated using a high-speed centrifuge to obtain a solid precipitate. 60 g of distilled water and 22.1 g of AA were added to the precipitate, and then the mixture was reacted at 50°C for 1 hour while being mixed using a mechanical stirrer. After the reaction for 1 hour, a mixed solution in which 1.46 g of P-123 was dissolved in 22.1 g of AA was added and stirred for 5 minutes. After the reaction, the solid was separated again using a high-speed centrifuge, 60 g of distilled water and 11 g of AA were added to the obtained precipitate, and then the mixture was reacted at 50°C for 1 hour while being mixed using a mechanical stirrer. After the reaction for 1 hour, a mixed solution in which 6 g of P-123 was dissolved in 14.7 g of AA was added and stirred for 5 minutes. The solid precipitate obtained using centrifugation was separated, and washing and centrifugation with 100 mL of distilled water were repeated three times to obtain a final solid precipitate. The final catalyst precipitate was dried under a vacuum of 30 in.Hg at 80°C until a constant weight was reached, thereby preparing a double metal cyanide catalyst DMC-AA-P123.

At this time, the prepared catalyst DMC-AA-P123 had an apparent density of 0.6904 g/cm³.

The apparent density was calculated by putting 0.5 g of the dried catalyst powder into a 1 mL graduated cylinder, checking the volume (mL) of the scale, and measuring the weight (g) with a precision balance. $Density = mass \left(g\right) / volume \left(mL\right)$

### Preparation Example 2: Preparation of Double Metal Cyanide Catalyst DMC-AA-PAA

A catalyst was prepared in the same manner as in Preparation Example 1, except that poly(acrylic acid sodium salt) (PAA, Mw ~5,100 g/mol) (homo-polymer) as a co-complexing agent was used instead of P-123 (co-polymer) as a co-complexing agent. The amount of PAA used at this time had the same molar ratio as that of P-123 and was changed according to the difference in molecular weight, and finally a double metal cyanide catalyst DMC-AA-PAA was prepared.

At this time, the prepared catalyst DMC-AA-PAA had an apparent density of 0.4352 g/cm³.

### Preparation Example 3: Preparation of Double Metal Cyanide Catalyst DMC-MA-PAA

A catalyst was prepared in the same manner as in Preparation Example 2, except that methacrylic acid (MA) as a complexing agent was used instead of acrylic acid (AA) as a complexing agent. The amount of MA used at this time had the same molar ratio as that of AA and was changed according to the difference in molecular weight, and finally a double metal cyanide catalyst DMC-MA-PAA was prepared.

At this time, the prepared catalyst DMC-MA-PAA had an apparent density of 0.3640 g/cm³.

### Preparation Example 4: Preparation of Double Metal Cyanide Catalyst DMC-MA

A double metal cyanide catalyst DMC-MA was prepared in the same manner as in Preparation Example 3, except that PAA as a co-complexing agent was not used.

At this time, the prepared catalyst DMC-MA-PAA had an apparent density of 0.4061 g/cm³.

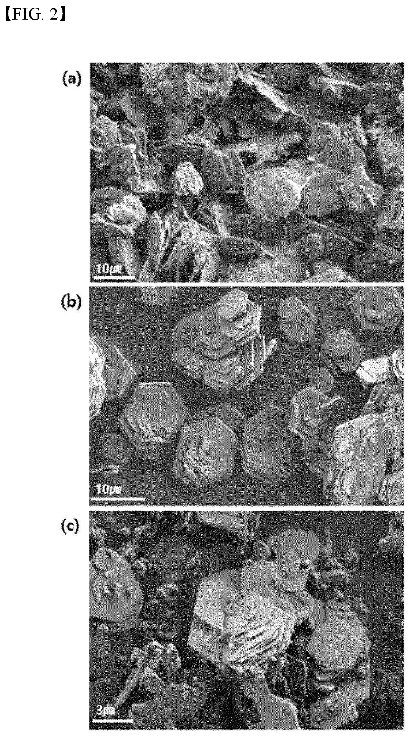

FIG. 2 shows scanning electron microscope (FE-SEM) analysis images of the catalysts prepared according to Preparation Examples 1, 3, and 4.

Specifically, FIG. 2(a) shows a scanning electron microscope (FE-SEM) analysis image of the catalyst prepared according to Preparation Example 1, FIG. 2(b) shows a scanning electron microscope (FE-SEM) analysis image of the catalyst prepared according to Preparation Example 3, and FIG. 2(c) shows a scanning electron microscope (FE-SEM) analysis image of the catalyst prepared according to Preparation Example 4.

Referring to FIG. 2(a), it can be confirmed that the catalyst prepared according to Preparation Example 1 is a mixture of secondary particles in which plate-shaped particles on a specimen are aggregated and secondary particles in which irregularly shaped particles are aggregated.

Referring to FIG. 2(b), it can be confirmed that the catalyst prepared according to Preparation Example 3 generally has a hexagonal secondary particle shape formed by face-to-face stacking of hexagonal plate-shaped particles based on broad surfaces.

Referring to FIG. 2(c), it can be confirmed that the catalyst prepared according to Preparation Example 4 is a mixture of hexagonal secondary particles in which plate-shaped particles similar to those of Preparation Example 3 are stacked, small-diameter particles having an irregular shape positioned on the surface thereof, small-diameter secondary particles formed by aggregation of a plurality of small particles, and single plate-shaped particles. Meanwhile, in the case of the catalyst prepared according to Preparation Example 4, since it contains a large amount of irregular particles and single plate-shaped particles among small-diameter particles, it was considered that it may cause problems such as operating failure due to clogging of a separator by the small-diameter particles during catalyst separation in a polyol preparation process and reduction in catalyst recovery amount, and thus was judged to be unsuitable for application to a polyol preparation process in which the catalyst is repeatedly used.

### (Example 1: Polyol Preparation Experiment Using DMC-AA-PAA)

0.11 g of the DMC-AA-PAA catalyst prepared according to Preparation Example 2 was introduced into a high-pressure reactor together with 90 mL of toluene, and the reactor was fastened. Thereafter, the inside of the reactor was purged with CO₂ gas, and the CO₂ pressure was adjusted while heating the reactor to 115°C. In a state in which the final internal temperature of the reactor was maintained at 115°C and the internal pressure of the reactor was maintained at 20 barg, propylene oxide (PO) and polypropylene glycol (PPG-1000, Kumho Petrochemical) were introduced at an input rate of 1 g/min while stirring the material inside the reactor, and the reaction was performed for 2 hours while stirring under the above temperature and pressure conditions. After completion of the reaction, the catalyst among the materials inside the reactor was separated using a filter to obtain a product. Propylene carbonate (PC) formed by a side reaction was separated, and liquid-liquid separation purification was performed to obtain a final polyol. 1 L of distilled water and 50 g of chloroform were added to the product from which the catalyst had been removed and stirred, thereby separating the product into an upper liquid and a lower liquid, and then chloroform contained in the separated lower liquid was vacuum-evaporated to obtain a final polyether carbonate polyol.

### (Example 2: Polyol Preparation Experiment Using DMC-MA-PAA)

A polyol was prepared in the same manner as in Example 1, except that DMC-MA-PAA prepared according to Preparation Example 3 was used instead of the DMC-AA-PAA catalyst prepared according to Preparation Example 2.

### (Comparative Example 1: Polyol Preparation Experiment Using DMC-MA-P123)

A polyol was prepared in the same manner as in Example 1, except that DMC-AA-P123 prepared according to Preparation Example 1 was used instead of the DMC-AA-PAA catalyst prepared according to Preparation Example 2.

The weight molecular weight, PDI, polyol selectivity, carbonate content in polyol, and number of functional groups of the polyols prepared according to Examples 1 to 2 and Comparative Example 1 are summarized in Table 1 below.

The prepared polyether carbonate polyol was subjected to H-NMR spectroscopic analysis of polycarbonate (400 MHz Spectrometer, Varian) to measure molecular weight, carbonate selectivity, and content. Specifically, in ¹H-NMR spectroscopic analysis, a carbonate peak appeared around 4.5 ppm, an ether peak appeared around 3.5 ppm, and a branch peak of an initiator appeared around 0.8 ppm. Using these, molecular weight, carbonate selectivity, and carbonate content were calculated according to the following Equations 1 to 3, respectively. 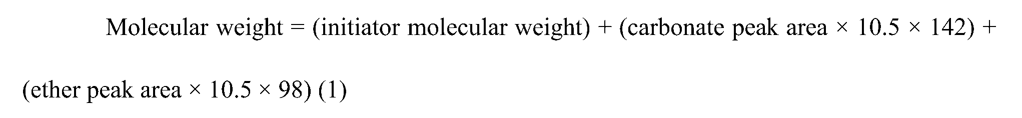 Molecular weight = (initiator molecular weight) + (carbonate peak area × 10.5 × 142) + (ether peak area × 10.5 × 98) (1) 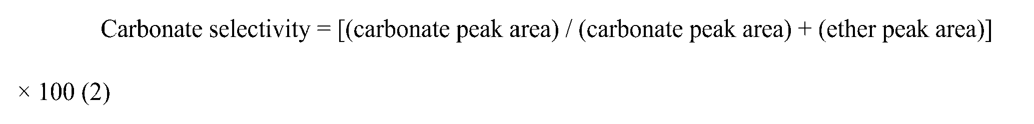 Carbonate selectivity = [(carbonate peak area) / (carbonate peak area) + (ether peak area)] × 100 (2) 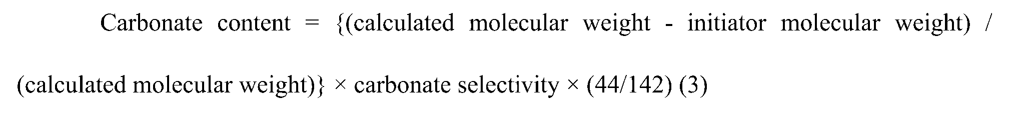 Carbonate content = {(calculated molecular weight - initiator molecular weight) / (calculated molecular weight)} × carbonate selectivity × (44/142) (3)

Here, 10.5 represents the ratio of the number of hydrogens in the molecule, and 142, 98, 44, and 142 represent molecular weights of molecular repeating units.

Meanwhile, the hydroxyl value was measured by ASTM E 1899-97, the OHv unit is mgBu₄OH/g, and the number of functional groups corresponds to the hydroxyl value included per one molecule of the polyether carbonate polyol as the final product.

**[Table 1]**

| | Catalyst | Mn (g/mol) | PDI | Selectivity | | Carbonate Content in Polyol (%) | Number of Functional Groups |
|---|---|---|---|---|---|---|---|
| | | | | Polyol (%) | PC (%) | | |
| Comparative Example 1 | DMC-AA-P123 | 3,100 | 1.55 | 67.6 | 32.4 | 9.6 | 2.7~3.0 |
| Example 1 | DMC-AA-PAA | 3,200 | 1.60 | 68.4 | 31.6 | 10.9 | 2.8 |
| Example 2 | DMC-MA-PAA | 3,700 | 1.37 | 89.0 | 11.0 | 14.3 | 2.7 |

Referring to Table 1, in the case of Examples 1 and 2, the selectivity of the prepared polyol was found to be 68% or more, and the weight molecular weights were 3200 g/mol and 3700 g/mol, respectively, which were greater than that of Comparative Example 1.

In addition, in the case of Examples 1 and 2, the carbonate contents in the prepared polyols were 10.9% and 14.3%, respectively, which were higher than that of Comparative Example 1.

Meanwhile, in the case of Examples 1 and 2, the numbers of functional groups were measured as 2.8 and 2.7, respectively, and in the case of Comparative Example 1, it was confirmed that the number of functional groups was about 2.7 to 3.0.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A double metal cyanide catalyst, comprising:
a metal salt, a metal cyanide salt, a complexing agent, and a co-complexing agent,
wherein the co-complexing agent is a homo-polymer having a weight average molecular weight of 5500 g/mol or less.

2. The double metal cyanide catalyst of claim 1,
wherein the co-complexing agent comprises one or more selected from a polyacrylic acid polymer, polyethylene glycol, polypropylene glycol, a copolymer thereof, and a mixture thereof.

3. The double metal cyanide catalyst of claim 1,
wherein the complexing agent comprises one or more selected from acrylic or methacrylic compounds.

4. The double metal cyanide catalyst of claim 3,
wherein the acrylic or methacrylic compound comprises one or more selected from the following Chemical Formulas 1-1 to 1-2:

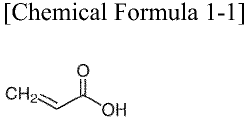

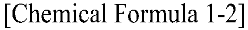

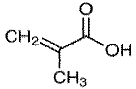

5. The double metal cyanide catalyst of claim 1,
wherein the double metal cyanide catalyst is a compound represented by the following Chemical Formula 1:
[Chemical Formula 1] Mₐ[M' (CN)₆)]_{b}·L_{c}·L'_{d}
wherein, in Chemical Formula 1,
M is one selected from zinc(II), iron(II), iron(III), nickel(II), manganese(II), cobalt(II), tin(II), lead(II), molybdenum(IV), molybdenum(VI), aluminum(III), vanadium(V), vanadium(IV), strontium(II), tungsten(IV), tungsten(VI), copper(II), and chromium(III),
M' is one selected from iron(II), iron(III), cobalt(II), cobalt(III), chromium(II), chromium(III), manganese(II), manganese(III), iridium(III), nickel(II), rhodium(III), ruthenium(II), vanadium(V), and vanadium(IV),
L comprises an acrylic or methacrylic compound as a complexing agent,
L' comprises a hydrophilic homo-polymer as a co-complexing agent, and
a, b, c, and d are positive numbers.

6. The double metal cyanide catalyst of claim 1,
wherein an apparent density of the double metal cyanide catalyst is 0.30 g/cm³ to 0.60 g/cm³.

7. The double metal cyanide catalyst of claim 1,
wherein the double metal cyanide catalyst is a secondary particle in which layered nanosheets are stacked.

8. The double metal cyanide catalyst of claim 7,
wherein an average major-axis length of a broad surface of the layered nanosheet is 1.0 µm to 15.0 µm.

9. The double metal cyanide catalyst of claim 7,
wherein an average minor-axis length of a broad surface of the layered nanosheet is in a range of 1/7 to 6/7 of an average major-axis length.

10. The double metal cyanide catalyst of claim 7,
wherein an average thickness of the nanosheet is 25 nm to 85 nm.

11. A method for preparing a double metal cyanide catalyst, comprising:
preparing a first solution comprising a metal salt, a complexing agent, and water;
preparing a second solution comprising a metal cyanide salt and water;
preparing a third solution comprising a complexing agent and a co-complexing agent;
preparing a fourth solution by mixing the first solution and the second solution;
performing a first reaction step by adding the third solution to the fourth solution and reacting the same;
performing a second reaction step by separating a precipitate formed in the first reaction step, and then mixing the separated precipitate with a solution comprising water and a complexing agent and reacting the same;
performing a third reaction step by adding a fifth solution comprising a complexing agent and a co-complexing agent after completion of the second reaction step and reacting the same; and
separating a precipitate formed in the third reaction step,
wherein the co-complexing agent is a homo-polymer having a weight average molecular weight of 5500 g/mol or less.

12. The method for preparing a double metal cyanide catalyst of claim 11,
wherein, in the step of preparing the first solution comprising the metal salt, the complexing agent, and water,
the metal salt, the complexing agent, and water are mixed and heated to a temperature of 50°C to 90°C.

13. The method for preparing a double metal cyanide catalyst of claim 11,
wherein, in the step of preparing the second solution comprising the metal cyanide salt and water,
the metal cyanide salt and water are mixed and heated to a temperature of 50°C to 70°C.

14. The method for preparing a double metal cyanide catalyst of claim 11,
wherein, in the step of preparing the first solution comprising the metal salt, the complexing agent, and water,
the complexing agent is mixed in an amount of 0.04 mol to 1.0 mol per 1.0 mol of the water.

15. The method for preparing a double metal cyanide catalyst of claim 11,
wherein, in the step of preparing the third solution comprising the complexing agent and the co-complexing agent,
a molar ratio of the complexing agent to the co-complexing agent (complexing agent:co-complexing agent) is 600:1 to 1200:1.

16. The method for preparing a double metal cyanide catalyst of claim 11,
wherein, in the third reaction step of adding the fifth solution comprising the complexing agent and the co-complexing agent after completion of the second reaction step and reacting the same,
a molar ratio of the complexing agent to the co-complexing agent in the fifth solution (complexing agent:co-complexing agent) is 150:1 to 1250:1.

17. The method for preparing a double metal cyanide catalyst of claim 11,
wherein, in the step of preparing the fourth solution by mixing the first solution and the second solution,
a molar ratio of the metal cyanide salt to the metal salt in the prepared fourth solution (metal cyanide salt:metal salt) is 2:1 to 30:1.

18. The method for preparing a double metal cyanide catalyst of claim 11,
wherein the second reaction step and the third reaction step are performed two or more times.

19. The method for preparing a double metal cyanide catalyst of claim 11,
further comprising washing and drying the precipitate separated in the step of separating the precipitate formed in the third reaction step.

20. The method for preparing a double metal cyanide catalyst of claim 19,
wherein, in the step of washing and drying the separated precipitate, the precipitate is washed using water.

21. A method for preparing a polyol, comprising:
introducing the double metal cyanide catalyst of any one of claims 1 to 10 and a solvent into a reactor;
purging the inside of the reactor using CO₂ gas, and then adjusting pressure with CO₂ gas while heating the reactor;
introducing an initiator and an epoxy compound into the reactor to form a product; and
separating a polyol in the product.

22. The method for preparing a polyol of claim 21,
wherein the initiator is a compound represented by the following Chemical Formula 2: 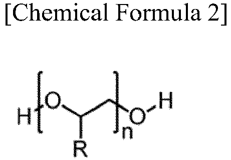
wherein, in Chemical Formula 2, R is H or an alkyl group having 1 carbon atom, and n is an integer in a range of 1 to 227.

23. The method for preparing a polyol of claim 21,
wherein the epoxy compound is a compound represented by the following Chemical Formula 3: 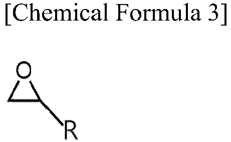
wherein, in Chemical Formula 3, R may be selected from H, -CH₃, -CH₃OH, methyl halides (-CH₃F, -CH₃Cl, and -CH₃Br), and alkyl groups having 1 to 8 carbon atoms.

24. The method for preparing a polyol of claim 21,
wherein a weight average molecular weight of the polyol is 3000 g/mol to 5000 g/mol.

25. The method for preparing a polyol of claim 21,
wherein a polydispersity index (PDI) of the polyol is 1.65 or less.

26. The method for preparing a polyol of claim 21,
wherein selectivity of the polyol is 65% or more.

27. The method for preparing a polyol of claim 21,
wherein the number of functional groups of the polyol is 2.5 or more.
